# EUROPEAN PATENT APPLICATION

(11) **EP 1 816 086 A1**
(43) Date of publication of application: **08.08.2007**
(21) Application number: 05795376.2
(22) Date of filing: 18.10.2005
(51) Int. Cl.: B65D 53/00, C09K 3/10, C08L 53/00

(54) **COMPOSITION FOR CAP LINER**

(30) Priority: 10.11.2004 JP 2004326748
(71) Applicant: Kaneka Corporation, Kita-ku Osaka-shi, Osaka 530-8288 (JP)
(72) Inventor: KIMURA, Katsuhiko, c/o KANEKA CORPORATION, Settsu-shi, Osaka 5660072 (JP); URAKAMI, Masanobu, c/o KANEKA CORPORATION, Settsu-shi, Osaka 5660072 (JP)
(74) Representative: Vossius & Partner
(86) International application number: PCT/JP2005/019139
(87) International publication number: WO 2006/051672

(57) **Abstract**

A cap liner composition, which has an excellent gas barrier property and sanitary characteristics and can be opened easily in an actual use, and which is used for a sealing material for a beverage cap, is provided. A cap liner using the composition is provided as well. The cap liner composition includes (a) 100 weight parts of isobutylene-based block copolymer formed of a polymer block based on isobutylene and a polymer block formed of a monomer ingredient not based on isobutylene, and (b) 0.1 to 20 weight parts of lubricant added to the (a) isobutylene-based block copolymer.

## Description

### Technical Field

The present invention relates to a cap liner composition used for a sealing material for a beverage cap, which has an excellent gas barrier property and sanitary characteristics, and which can be opened easily in use. The present invention relates also to a cap liner using the composition. More specifically, the present invention relates to a cap liner composition used for a sealing material for a beverage cap and a cap liner using the same, where the cap liner composition is imparted with a favorable sealing property due to the excellent flexibility and gas barrier property of an isobutylene-based block copolymer. Moreover, the cap liner composition serves to prevent oxidation caused by transmission of oxygen to the content such as a soft drink or degassing from the content such as a carbonated drink applied with internal pressure. As a result, an abnormal increase of cap-opening torque is prevented so that the cap can be opened easily in use. Furthermore, the sanitary characteristics are excellent, since elution from the liner material is prevented.

### Background Art

For conventional liner materials of lids for containers such as glass bottles, metal bottles, PET containers or the like, liner materials such as cork, soft PVC, olefin-based resins such as low-density polyethylene, and styrene-based elastomer have been used. The cork is excellent in the impact resilience or other properties, but as it is a natural material, problems would arise in the stability, in the quality and in the supply, and dust would be generated. The PVC-based material is flexible and excellent in the sealing property, but it can cause problems such as elution of a plasticizer, and dioxin generation during low-temperature incineration. In view of such circumstances, recently, the materials for the liners have been changed to olefin-based resins and styrene-based elastomers having excellent sanitary characteristics and processability.

When an olefin-based resin such as low-density polyethylene is used for the liner material, problems such as a leak will arise in the sealing property due to plastic deformation and permanent strain, regarding the contents that require high-temperature filling and heat sterilization or carbonated drinks or the like applied with internal pressure. Moreover, a leak may be caused by a shock or the like during transportation. Therefore, liner materials based on styrene-based elastomers having an excellent sealing property have mainly been used.

For the liner materials based on the styrene-based elastomers, a composition including a hydrogenated styrene-butadiene based block copolymer, polyolefin, and a softener such as liquid paraffin is used in general (Patent documents 1-4). A liner material including such a composition is flexible and has an excellent sealing property, and it can endure hot filling of contents and heat sterilization after filling and sealing. Furthermore, a leak caused by thermal deformation or thermal contraction can be prevented efficiently. However, in comparison with the case of a polyolefin, the hydrogenated styrene-butadiene-based block copolymer has a high gas permeability and poor performance in blocking external oxygen. As a result, the contents may be oxidized easily and the term for sustaining the flavor and aroma is short. When the content is a carbonated drink, the drink will become stale soon, and thus the term for retaining the internal pressure is shortened. Furthermore, for imparting a sufficient sealing property, a large quantity of softener such as liquid paraffin must be added. When the content is a milk beverage or the like containing fat, the softener will be eluded easily and problems in the sanitary characteristics may arise.
Patent document 1: JP H02-57569 A
Patent document 2: JP H07-76360 A
Patent document 1: JPH 11-106565 A
Patent document 1: JP 2000-38495 A

### Disclosure of Invention

### Problem to be Solved by the Invention

The present invention has been made in order to solve the above described problems in the prior art, and it is an object of the present invention to provide a cap liner composition used for a sealing material of a beverage cap, which has an excellent gas barrier property and sanitary characteristics and also can be opened easily in use. The present invention provides also a cap liner using the composition.

### Means for Solving Problem

As a result of keen studies for achieving the above-mentioned objects, the inventors have solved the problems by using, as a liner material, a composition containing an isobutylene-based block copolymer and a lubricant.

Namely, the present invention relates to a cap liner composition including (a) 100 weight parts of isobutylene-based block copolymer formed of a polymer block based on isobutylene and a polymer block formed of a monomer ingredient not based on isobutylene, and (b) 0.1 to 20 weight parts of lubricant added to the (a) isobutylene-based block copolymer.

In a preferred embodiment for the cap liner composition, (c) 1 to 100 weight parts of polyolefin is added further.

In a preferred embodiment for the cap liner composition, (d) 1 to 100 weight parts of softener is added further.

In a preferred embodiment for the cap liner composition, the ingredient (a) is an isobutylene-based block copolymer formed of a polymer block based on isobutylene and a polymer block based on an aromatic vinyl-based monomer.

In a preferred embodiment for the cap liner composition, (a) the isobutylene-based block copolymer is a triblock copolymer formed of a polymer block based on an aromatic vinyl-based monomer; a polymer block based on isobutyLene; and, a polymer block based on an aromatic vinyl-based monomer.

In a preferred embodiment for the cap liner composition, the aromatic vinyl-based monomer in the ingredient (a) is at least one selected from the group consisting of styrene, p-methylstyrene, α-methylstyrene, and indene.

In a preferred embodiment for the cap liner composition, the lubricant of the ingredient (b) is fatty acid amide.

In a preferred embodiment for the cap liner composition, the polyolefin of the ingredient (c) is at least one selected from the group consisting of polyethylene and polypropylene.

In a preferred embodiment for the cap liner composition, the softener of the ingredient (d) is a polybutene-based oil.

The present invention relates also to a cap liner formed of the composition.

### Effects of the Invention

A cap liner including the composition according to the present invention has an excellent flexibility and gas barrier property imparted by an isobutylene-based block copolymer. The cap liner can change its shape flexibly in sealing, and furthermore, it can prevent oxidation caused by oxygen permeated into a content such as a soft drink or the like, and degassing from a content such as a carbonated drink applied with internal pressure. Since an abnormal rise of the cap-opening torque is prevented, the cap can be opened easily in use. Moreover, since elution of ingredients from the liner material is prevented, excellent sanitary characteristics are realized. Therefore, the cap liner can be used preferably for a soft drink, a carbonated drink, a milk beverage or the like.

### Description of the Invention

A cap liner composition according to the present invention includes as essential ingredients: (a) an isobutylene-based block copolymer formed of a polymer block based on isobutylene and a polymer block formed of a monomer ingredient not based on isobutylene; and (b) a lubricant.

It is further preferable that the monomer ingredient not based on isobutylene, which is included in the isobutylene-based block copolymer as the ingredient (a) according to the present invention, denotes a monomer ingredient containing isobutylene of not more than 30 wt%. The content of isobutylene in the monomer ingredient not based on isobutylene is not more than 10 wt% preferably, and more preferably, it is not more than 3 wt%.

There is no particular limitation for the monomer other than isobutylene in the monomer ingredient not based on isobutylene according to the present invention as long as the monomer ingredient is capable of cationic polymerization, but the examples include monomers such as aliphatic olefins, aromatic vinyls, dienes, vinyl ethers, silanes, vinylcarbazole, β-pinene, acenaphthylene and the like. Each of them can be used alone or as a combination of at least two ingredients.

Examples of the aliphatic olefin-based monomers include ethylene, propylene, 1-butene, 2-methyl-1-butene, 3-methyl-1-butene pentene, hexene, cyclohexene; 4-methyl-1-pentene, vinylcyclohexane, octene, norbornene and the like.

Examples of the aromatic vinyl-based monomers include: styrene; o⁻, m⁻ or p-methylstyrene; α-methylstyrene; β-methylstyrene;
2,6-dimethylstyrene; 2,4-dimethylstyrene; α-methyl-o-methylstyrene;
α-methyl-m-methylstyrene; α-methyl-p-methylstyrene;
β-methyl-o-methylstyrene; β-methyl-m-methylstyrene;
β-methyl-p-methylstyrene; 2,4,6-trimethylstyrene;
α-methyl-2,6-dimethylstyrene; α-methyl-2,4-dimethylstyrene;
β-methyl-2,6-dimethylstyrene; β-methyl-2,4-dimethylstyrene; o⁻, m⁻, or
p-chlorostyrene; 2,6-dichlorostyrene; 2,4-dichlorostyrene;
α-chloro-o-chlorostyrene; α-chloro-m-chlorostyrene; α-chloro-p-chlorostyrene;
β-chloro-o-chlorostyrene; β-chloro-m-chlorostyrene; β-chloro-p-chlorostyrene;
2,4,6-trichlorostyrene; α-chloro-2,6-dichlorostyrene;
a-chloro-2,4-dichlorostyrene; β-chloro-2,6-dichlorostyrene;
β-chloro-2,4-dichlorostyrene; o⁻, m⁻, or p-t-butylstyrene; o⁻, m⁻, or
p-methoxystyrene; o⁻, m⁻, or p-chloromethylstyrene; o⁻, m⁻, or
p-bromomethylstyrene; a styrene derivative substituted with a silyl group; indene; vinylnaphtahalene; and the like.

Examples of the diene-based monomers include butadiene, isoprene, hexadiene, cyclopentadiene, cyclohexadiene, dicyclopentadiene, divinylbenzene, ethylidene norbornene; and the like.

Examples of the vinyl ether-based monomers include: methyl vinyl ether; ethyl vinyl ether; (n-, iso)propyl vinyl ether; (n⁻, sec⁻, tert⁻, iso)butyl vinyl ether; methyl propenyl ether; ethyl propenyl ether; and the like.

Examples of the silane compounds include: vinyl trichlorosilane; vinyl methyl dichlorosilane; vinyl dimethyl chlorosilane; vinyl dimethyl methoxysilane; vinyl trimethylsilane; divinyl dichlorosilane; divinyl dimethylsilane; divinyl dimethylsilane; 1,3-divinyl-1,1,3,3-tetramethyl disiloxane; trivinyl methylsilane; γ-methacryloyloxypropyl trimethylsilane; γ-methacryloyloxypropyl methyl dimethoxysilane; and the like.

In light of balancing the physical property, the polymerization property or the like, it is preferable that the monomer ingredient not based on isobutylene according to the present invention is a monomer ingredient based on an aromatic vinyl-based monomer. The aromatic vinyl-based monomer according to the present invention denotes a monomer ingredient containing an aromatic vinyl-based monomer of at least 60 wt%, or more preferably, at least 80 wt%. Preferably, the aromatic vinyl-based monomer in use is at least one monomer selected from the group consisting of styrene, α-methylstyrene, p-methylstyrene, and indene. In light of the cost, styrene, α-methylstyrene or a mixture thereof is used particularly preferably.

The monomer ingredient based on isobutylene according to the present invention can contain or not contain a monomer other than isobutylene. In general, the monomer ingredient contains isobutylene of at least 60 wt%, or preferably at least 80 wt%. There is no particular limitation for the monomer other than isobutylene as long as the monomer is capable of cationic polymerization. Examples of the monomers are as described above.

There is no particular limitation for the isobutylene-based block copolymer according to the present invention as long as it has a polymer block based on isobutylene and a polymer block of a monomer ingredient not based on isobutylene. Applicable examples include a block copolymer, a diblock copolymer, a triblock copolymer, a multiblock copolymer and the like, having a linear, a branched, or a star structure, for example. From the viewpoint of the physical property balance and the processability, examples of preferred block copolymers include a triblock copolymer formed of: a polymer block based on an aromatic vinyl-based monomer; a polymer block based on isobutylene; and, a polymer block based on an aromatic vinyl-based monomer. Each of them can be used alone or can be combined with at least one of the other examples in use, for obtaining desired physical property and processability.

There is no particular limitation for the ratio of the polymer block based on isobutylene to the polymer block formed of a monomer ingredient not based on isobutylene. From the viewpoint of the flexibility and rubber elasticity, it is preferable that the polymer block based on isobutylene is 95 to 40 wt% and the polymer block formed of a monomer ingredient not based on isobutylene is 5 to 60 wt%. It is particularly preferable that the polymer block based on isobutylene is 90 to 60 wt%, and the polymer block formed of a monomer ingredient not based on isobutylene is 10 to 40 wt%.

Similarly, there is no particular limitation for the number-average molecular weight of the isobutylene-based block copolymer, but preferably it is 30000 to 500000 from the viewpoint of fluidity, processability, rubber elasticity and the like, and particularly preferably, 50000 to 400000. The physical property from a mechanical viewpoint is not exhibited sufficiently when the number-average molecular weight of the isobutyleae-based block copolymer is lower than the above range. When the number average molecular weight exceeds the above range, unfavorable results may arise in the fluidity and processability.

Though there is no particular limitation for the method of producing the isobutylene-based block copolymer, for example, the copolymer can be obtained by polymerizing a monomer based on isobutylene and a monomer ingredient not based on isobutylene in the presence of a compound expressed with the Formula (1) below.

(CR¹R²X)ₙR³ (1)

(In the above formula, X denotes a substituent selected from the group consisting of a halogen atom, an alkoxy group or an acyloxy group having 1-6 carbon atoms, and R¹, R² are hydrogen atoms or monovalent hydrocarbon groups having 1-6 carbon atoms respectively, and R¹ and R² can be same or different from each other; R³ is either a multivalent aromatic hydrocarbon group or a multivalent aliphatic hydrocarbon group; and n denotes a natural number of 1 to 6.)
The compound expressed with the above Formula (1) serves as an initiator. It is considered to generate carbocation in the presence of Lewis acid or the like and provide an origin for the cationic polymerization. Examples of the compound expressed with Formula (1) used in the present invention include (1-chlor-1-methylethyl)benzene [C₆H₅C(CH₃)₂Cl]; 1,4-bis(1-chlor-1-methylethyl)benzene [1,4-Cl(CH₃)₂CC₆H₄C(CH₃)₂Cl]; 1,3-bis(1-chlor-1-methylethyl)benzene [1,3-Cl(CH₃)₂CC₆H₄C(CH₃)₂Cl]; 1,3,5-tris(1-chlor-1-methylethyl)benzene [1,3,5-(ClC(CH₃)₂C₆H₃]; and
1,3-bis(1-chlor-1-methylethyl)-5-(tert-butyl)benzene
[1,3-(C(CH₃)2Cl)₂-5-(C(CH₃)₃)C₆H₃].

Among them, bis(1-chlor-1-methyletbyl)benzene [C₆H₄(C(CH₃)₂Cl)₂] and tris(1-chlor-1-methylethyl)benzene [(ClC(CH₃(CH₃)₂)₃C₆H₃] are preferred particularly. The bis(1-chlor-1-metbylethyl)benzene is called also bis(α-chloroisopropyl)benzene, bis(2-chloro-2-propyl)benzene or dicumyl chloride. The tris(1-chlor-1-methylethyl)benzene is called also tris(α-chloroisopropyl)benzene, tris(2-chloro-2-propyl)benzene or tricumyl chloride.

When producing the isobutylene-based block copolymer by polymerization, a Lewis acid catalyst further can be present. The Lewis acid is not limited particularly as long as it can be used for cationic polymerization. Preferable examples include: metal halides such as TiCl₄, TiBr₄, BCl₃, BF₃, BF₃·OEt₂, SnCl₄, SbCl₅, SbF₅, WCl₆, TaCl₅, VCl₅, FeCl₃, ZnBr₂, AlCl₃, and AlBr₃; and organic metal halides such as Et₂AlCl, and EtAlCl₂. Among them, TiCl₄, BCl₃, and SnCl₄ are preferred from the viewpoint of the capability as a catalyst and the industrial availability. Though the used amount of the Lewis acid is not limited particularly, it can be determined in view of the polymerization property, polymerization concentration or the like of the monomer in use. In general, it can be used in a molar chemical equivalent of 0.1 to 100 with respect to the compound expressed with the Formula (1). A preferable range is 1 to 50 molar chemical equivalent.

In polymerization of the isobutylene-based block copolymer, an electron donor ingredient further can be present as required. This electron donor ingredient is considered as effective in stabilizing the growth of the carbocation in a cationic polymerization. Due to addition of the electron donor, a polymer having a narrow molecular weight distribution and a controlled structure is generated. There is no particular limitation for the available electron donor ingredients, but the examples include pyridines, amines, amid.es, sulfoxides, esters or metallic compounds having oxygen atoms coupled with metal atoms.

Polymerization of the isobutylene-based block copolymer can be carried out in an organic solvent as required. There is no particular limitation for the organic solvent as long as the cationic polymerization is not inhibited substantially. The specific examples include: halogenated hydrocarbons such as methyl chloride, dichloromethane, chloroform, ethyl chloride, dichloroethane, n-propyl chloride, n-butyl chloride, and benzene chloride; alkylbenzenes such as benzene, toluene, xylene, ethyl benzene, propyl benzene, and butyl benzene; linear aliphatic hydrocarbons such as ethane, propane, butane, pentane, hexane, heptane, octane, nonane, and decane; branched aliphatic hydrocarbons such as 2-methylpropane, 2-methylbutane, 2,3,3-trimethylpentane, and 2,2,5-trimethylhexane; cyclic aliphatic hydrocarbons such as cyclohexane, methylcyclohexane, and ethylcyclohexane; a paraffin oil produced by hydrogenation-refining a petroleum fraction; and the like.

The solvent is used alone or combined with at least one other solvent from the viewpoint of the balance of the polymerization property of the monomer forming the block copolymer and the solubility or the like of the thus formed block copolymer.

The used amount of the solvent is determined in view of the viscosity of the thus obtained polymer solution and convenience in cooling, so that the polymer concentration will be 1 to 50 wt%, or preferably 5 to 35 wt%.

In an actual polymerization, the respective ingredients are mixed under cooling condition, for example, at a temperature of not lower than -100°C and lower than 0°C. For a balance between the energy cost and the polymerization stability, a particularly preferable temperature range is -30°C to -80°C.

The lubricant as the ingredient (b) according to the present invention is added to impart mainly a cap-opening property and processability. Preferable examples for the lubricant include: a lubricant based on fatty acid amide, a lubricant based on fatty acid metal salt, a lubricant based on fatty acid ester, a lubricant based on fatty acid, a lubricant based on aliphatic alcohol, a partial ester of a fatty acid and a polyhydric alcohol, a paraffinic lubricant and the like. Two or more of these lubricants may be chosen and used. Examples of the lubricant based on fatty acid amide include: erucamide, oleamide, stearamide, behenamide, ethylenebis stearamide, ethylenebis oleamide, ethylenebis erucamide, ethylenebis lauramide, m-xylylenebis stearamide, and p-phenylenebis stearamide. Examples of the lubricant based on fatty acid metal salt include: calcium stearate, magnesium stearate, aluminum stearate, zinc stearate, and barium stearate. Examples of the lubricant based on fatty acid ester include: methyl laurate, methyl myristate, methyl palmitate, methyl stearate, methyl oleate, methyl erucate, methyl behenate, butyle laurate, butyl stearate, isopropyl myristate, isopropyl palmitate, octyl palmitate, coconut fatty acid octyl ester, octyl stearate, particular tallow fatty acid octyl ester, lauryl laurate, stearyl stearate, behenyl behenate, cetyl myristate, hardened tallow, and hardened castor oil. Examples of the lubricant based on fatty acid include: stearic acid, palmitic acid, oleic acid, linoleic acid, and linolenic acid. Examples of the aliphatic alcohol include: stearyl alcohol, cetyl alcohol, myristil alcohol, and lauryl alcohol. Examples of the partial ester of a fatty acid and a polyhydric alcohol include: monoglyceride stearate, diglyceride stearate, and oleic monoglyceride. Examples of the paraffinic lubricant include: paraffin wax, liquid paraffin, polyethylene wax, polyethylene oxide wax, and polypropylene wax. In addition to that, montanic acid and the derivatives such as montanate, montanic acid metal salt, partially saponified ester of montanic acid can be used. Silicone oil can be used as well. Each of them can be used alone or can be combined with at least one of the other ingredients. Among them, in view of improvement in the cap-opening property and the processability, and also in view of the influences on the flavor and aroma of the contents, fatty acid amides are preferred, and erucamide is the most preferred. The cap-opening property can be improved further by jointly using the silicone oil.

The blending amount of the lubricant is 0.1 to 20 weight p arts with respect to 100 weight parts of (a) isobutylene-based block copolymer. Preferably the blending amount is 0.1 to 10 weight parts, and more preferably, 0.1 to 5 weight parts. The blending amount exceeding 20 weight parts is not favorable since the lubricant cannot be blended sufficiently, and the lubricant tends to be bled out, and furthermore, the mechanical strength of the thus obtained composition tends to be lowered. When the blending amount is less than 0.1 weight parts, the effect in improving the cap-opening property and the processability tends to be insufficient.

For the purpose of imparting fluidity, (c) polyolefin is added also to the cap liner composition according to the present invention. Examples of the polyolefin include: a homopolymer, a random copolymer, a block copolymer and the mixture of α-olefin; a random copolymer, a block copolymer and a graft copolymer of α-olefin and another unsaturated monomer; or an oxidized, halogenated or sulfonated product of these polymers. Each of them can be used alone or can be combined with at least one of the other ingredients. Specific examples include polyethylene, ethylene-propylene copolymer, ethylene-propylene-nonconjugated diene copolymer, ethylene-butene copolymer, ethylene-hexene copolymer, ethylene-octene copolymer, ethylene-vinyl acetate copolymer, ethylene-vinyl alcohol copolymer, ethylene-ethylacrylate copolymer, ethylene-acrylic acid copolymer, ethylene-methyl acrylate-maleic anhydride copolymer, polyethylene-based resins such as chlorinated, polyethylene, polypropylene, propylene-ethylene random copolymer, propylene-ethylene block copolymer, polypropylene-based resins such as chlorinated polypropylene, poly-1-butene, polyisobutylene, polymethylpentene, (co) polymer of cyclic olefin, and the like. Among them, in view of the balance between the cost and the physical properties, polyethylene, polypropylene or the mixture can be used preferably. Examples of the polyethylene include high-density polyethylene, low-density polyethylene, linear low-density polyethylene and the like. Examples of the polypropylene include homo-polypropylene, random polypropylene, block polypropylene and the like.

There is no particular limitation for the MFR of the polyolefin in use, but in view of the fluidity, the MFR is 0. 1 to 100 (g/10min.) preferably, and more preferably, 1 to 100 (g/10min.).

The addition amount of (c) polyolefin is 1 to 100 weight parts, preferably 1 to 70 weight parts, and more preferably 1 to 50 weight parts to with respect to 100 weight parts of (a) isobutylene-based block copolymer. When the amount exceeds 100 weight parts, the hardness is increased and the sealing property tends to deteriorate unfavorably.

In the cap liner composition according to the present invention, (d) softener is used also as required for imparting flexibility and fluidity. Though there is no particular limitation for the softener, and in general, materials in a liquid or fluid state at room temperature are used preferably. Examples of the softener include various softeners based on mineral oils, vegetable oils, synthetic oils or the like for rubbers or for resins. Examples of the mineral oil include naphthenic or paraffinic process oils. Examples of the vegetable oil include castor oil, cottonseed oil, linseed oil, rapeseed oil, soybean oil, palm oil, coconut oil, peanut oil, Japan tallow, pine oil, olive oil and the like. Examples of the synthetic oil include polybutene, low-molecular weight polybutadiene and the like. Among them, polybutene is used preferably in view of the compatibility with the ingredient (a) and the gas barrier property. Two or more kinds of these softeners can be combined suitably in use for obtaining a desired hardness and melt viscosity.

The blending amount of the (d) softener is 1 to 100 weight parts, preferably 1 to 50 weight parts and more preferably 1 to 30 weight parts with respect to 100 weight parts of the ingredient (a) isobutylene-based block copolymer. When the amount exceeds 100 weight parts, the softener tends to elute from the liner material into the content unfavorably.

Furthermore, a filler can be blended in the cap liner composition for improving the physical properties or for reducing the cost. Examples of preferable fillers include: flaky inorganic filler such as clay, diatomite, silica, talc, barium sulfate, calcium carbonate, magnesium carbonate, metallic oxides, mica, graphite, and aluminum hydroxide; granular or powdery solid filler or the like such as various metal powders, wood chips, glass powder, ceramic powder, carbon black, and granular or powdery polymers; other various kinds of natural or artificial staples, lint and the like. The weight can be reduced by blending hollow fillers such as inorganic hollow filler like glass balloon and silica balloon, and organic hollow filler like polyvinylidene fluoride and polyvinylidene fluoride copolymer. For further reducing weight and improving various physical properties such as impact absorption, various foaming agents can be mixed. Alternatively, gasses can be introduced during mechanical mixing. Among them, talc is preferred in view of the cost reduction and sanitary characteristics.

The blending amount of the filter is 1 to 100 weight parts, preferably 1 to 50 weight parts and more preferably 1 to 30 weight parts with respect to 100 weight parts of the (a) isobutylene-based block copolymer. When the amount exceeds 100 weight parts, the flexibility of the thus obtained composition tends to be sacrificed unfavorably.

The cap liner composition according to the present invention has an excellent gas barrier property For absorbing oxygen in the container or dissolved oxygen in the contents, an oxygen-absorbent can be added further. For the oxygen absorbent, well-known materials can be used without any particular limitations. The examples include: ascorbic acid (vitamin C); ascorbate; isoascorbic acid; isoascorbate; gallic acid; gallate; propyl gallate; isopropyl citrate; sugars such as glucose and fructose; alkali metal salts such as BHT, BHA and EDTA; organic oxygen absorbents such as tocopherol (vitamin E), hydroquinon, catechol, resorcine, dibutyl hydroxytoluene, dibutyl hydroxyanisole, pyrogallol, Rongalite, sorbose, glucose and lignin; ferrous oxygen absorbents such as iron powder, active iron, ferrous oxide, and ferric salt; inorganic oxygen absorbents such as sulfite, thiosulfate, dithionite, and hydrogensulfite; polybutadiene, polyisoprene, or a copolymer thereof; poly(meta-xylenedianime-adipic acid) (for example, MXD6 produced by Mitsubishi Gas Chemical Company, Inc. is commercially available); oxidizing-reducing resins having nonoxidative (reducing) active groups, such as poly(ethylene-methylacrylate-benzylacrylate), poly(ethylene-methylacrylate-tetrahydro furfuryl acrylate), poly(ethylene-methylacrylate-cydohexenyl methyl acrylate), and polyphenol-containing phenolaldehyde resin; or polymer-based oxygen absorbents such as a polymer metal complex; oxygen absorbents such as zeolite and activated carbon. Each of them will be used alone or together with at least one of other materials suitably in accordance with the use condition.

When the oxygen absorbent is a powder, the particle size is not limited particularly, but a smaller particle size is preferred to increase the surface area.

For controlling the oxygen absorbency, the oxygen absorbent can contain any other materials such as a catalyst, a water-retention agent and a hydrate. For example, the ferrous oxygen absorbent can be used together with an electrolyte. The electrolyte serves to accelerate the oxygen absorbance rate of the ferrous oxygen absorbent, and the examples include halides, carbonates, sulfates and hydroxides of alkali metals or alkaline-earth metals. Among them, halides are preferred particularly, and CaCl₂, NaCl, MgCl₂ or the like are preferred further.

The electrolyte can be coated on the particles of the ferrous oxygen absorbent or blended with the particles in use.

Typically the blending amount of the electrolyte is about 0.1 to about 10 wt% with respect to the ferrous oxygen absorbent.

Furthermore, a transition metal catalyst for an oxidation reaction can be used together with the oxidizing-reducing resin used as the polymer-based oxygen absorbent. Examples of this transition metal catalyst include metal salts of acetic acid, naphthenic acid, stearic acid, acetylacetonato complex, hydrochloric acid or the like of molybdenum, iron, cobalt, rhodium, nickel or the like.

Furthermore, a photosensitizer can be used together with the oxidizing-reducing resin. Examples of available photosensitizers include well-known types such as cleavage type and hydrogen-abstraction type. The hydrogen-abstraction type is used preferably. Specifically, the cleavage type photosensitizer has a skeleton of, for example, benzoin derivative, benzylketal, α-hydroxyacetophenone, and α-aminoacetophenone. The hydrogen-abstraction type photosensitizer has a skeleton of, for example, benzophenone, Michler's ketone, anthraquinone and thioxanthone. Such a photosensitizer can be used alone or can be combined with at least one of the other examples.

In the cap liner composition according to the present invention, an antioxidant and an ultraviolet absorber can be blended as required. The blending amount is 0.01 to 10 weight parts, and preferably 0.01 to 5 weight parts with respect to 100 weight parts of the (a) isobutylene-based block copolymer. Other available additives can be selected from a flame retardant, an antibacterial agent, a photostabilizer, a coloring agent, a fluidity modifier, an anti-blocking agent, an antistatic agent, a crosslinking agent, a crosslinking co-agent and the like. Such an agent can be used alone or can be combined with at least one of other additives. Further, various thermoplastic resins, thermosetting resins and any other thermoplastic elastomers or the like can be blended in a range not degrading the performance of the cap liner composition according to the present invention.

There is no particular limitation for the method for producing the cap liner composition according to the present invention, and well-known methods can be applied. For example, in the production, the above-mentioned ingredients and additive constituents as required can be melt-kneaded by using a heating kneader such as an uniaxial extruder, a biaxial extruder, a roller, a Banbury mixer, a Brabender, a kneader, a highly-shearing mixer and the like. The order for kneading the respective ingredients is not limited particularly, and it can be determined depending on the apparatus in use, the workability or the physical properties of the thus obtained cap liner composition.

It is preferable that the hardness of the cap liner composition according to the present invention is 40 to 95, or preferably 50 to 75 as a hardness (hereinafter, abbreviated as JIS-A hardness) measured with a spring-type A durometer defined in JIS K-6253. When the JIS-Ahardness is lower than 40, the material strength for the liner is low and thus the liner tends to be worn out at the time of opening and dosing the cap. When the JIS-Ahardness exceeds 90, the cap becomes too hard to be contacted tightly at the opening of the container firmly, and thus the sealing property of the content in the container tends to deteriorate.

In production of the cap liner according to the present invention, various methods and apparatuses generally in use can be applied corresponding to the types, application and shapes of the target cap, without any particular limitations. Examples thereof include arbitrary methods such as injection molding, extrusion molding, press-molding, blow-molding, calender molding, flow expansion and the like. These methods can be applied in combination.

The examples include a method of forming a cap liner composition as a sheet having a thickness of 0.5 to 1.0 mm, punching to have a diameter corresponding to the shape of the cap, and inserting into the cap and adhering; in-shell mold casting of dropping a predetermined amount of extruded molten resin into the cap, embossing during cooling to shape as a liner. The in-shell mold casting is excellent in view of quantity production.

Examples of the cap to which the cap liner composition of the present invention is applied include: PET bottles and metal bottles for various tea beverages, fruit beverages, vegetable beverages, carbonated drinks, milk beverages, coffee beverages, soft drinks, mineral water and the like; bottles for alcoholic beverages such as beer, whiskey, wine, sake and the like; wide mouthed bottles for foods such as jams and mushroom pickles; and small bottles for vitamin drinks or the like. The cap liner composition of the present invention is suitable particularly for caps used for PET bottles and metal bottles.

### Examples

The present invention will be described below more specifically with reference to Examples. It should be noted that the present invention is not limited by these Examples but it can be modified suitably within a range not changing the contents.

The molecular weights of the block copolymers and the physical properties of the cap liner compositions as described in Examples were measured using the methods below.

### (Molecular weight)

A GPC system manufactured by Waters Corporation was used with Shodex K-804 (polystyrene gel) as a column manufactured by SHOWA DENKO K.K. and chloroform as a mobile phase, having the number-average molecular weight in terms of polystyrene.

### (Sealing property)

In conformity with JIS K-6253, three press sheets having a thickness of 2 mm were laminated to measure the hardness (hereinafter, abbreviated as JIS- A hardness) with a spring type A durometer. In the tables, '•' denotes the JIS-Ahardness being 50 to 75, '▲' denotes the hardness being 75 to 95, and '×' denotes the hardness being less than 40 or more than 95.

### (Cap-opening property)

In conformity with JIS K-7125, a press sheet having a thickness of 1 mm was used for a test piece. For a sliding piece, a glass product whose contact face was processed to be spherical with a diameter of about 5 mm was used, on which a load of 200 g was mounted. The sliding piece was moved at a rate of 30 mm/min. so as to measure the coefficient of static friction. In the tables, '•' denotes the coefficient of static friction of less than 0.5, '▲' denotes the coefficient of static friction of 0.5 to 1.0, and 'x' denotes the coefficient of static friction of more than 1.0.

### (Gas barrier property)

In conformity with JIS K-7126, the transmission coefficients for oxygen and carbon dioxide were measured. For the test piece, a press sheet having a thickness of 1 mm was used and a differential pressure method (method-A) was applied. In the table, '•' denotes that the oxygen transmission coefficient is less than 1 × 10⁻¹⁵ mol · m/m² · sec · Pa, '▲' denotes the same coefficient being 1 to 2 × 10⁻¹⁵ mol · m/m² · sec · Pa, and '×' denotes the same coefficient exceeding 2 × 10⁻¹⁵ mol · m/m² · sec · Pa.

### (Fluidity)

In conformity with the method-A in JIS K-7210, a melt flow rate (MFR) per 10 minutes was measured with a load of 2.16 kgf at 230°C. The fluidity is regarded as insufficient when no flow occurs under the condition.

A cap liner composition was produced by using the materials below.
Ingredient (a) isobutylene-based block copolymer
   prepared in the Manufacture Example below
Ingredient (b) lubricant
   Erucamide: NEUTRON-S (hereinafter, abbreviated as EA) manufactured by Nippon Fine Chemical
   Oleamide: NEUTRON-P (hereinafter, abbreviated as OA) manufactured by Nippon Fine Chemical
   Hydrocarbon-based wax: Licolub H4 (hereinafter, abbreviated as H4) manufactured by Clariant Japan
Ingredient (c) polyolefin
   High-density polyethylene: HI-ZEX 1300J (density: 0.961 g/cm³; MFR: 12 g/10mm.; hereinafter, abbreviated as HDPE) manufactured by Mitsui Chemicals, Inc.
   Low-density polyethylene: MIRASON FL60 (density: 0.915 g/cm³; MFR: 70 g/10min.; hereinafter, abbreviated as LDPE) manufactured by Mitsui Chemicals, Inc.
   Linear low-density polyethylene: ULTZEX 15150J (density: 0.914 g/cm³; MFR: 1.5 g/10min.; hereinafter, abbreviated as LLDPE) manufactured by Mitsui Chemicals, Inc.
   Polypropylene (homo-type): Novatec PP MA3 (MFR: 11 g/10min.; hereinafter, abbreviated as HPP) manufactured by Japan Polychem Corporation
   Polypropylene (random type): Mitsui polypro J215W (MFR: 9 g/10min.; hereinafter, abbreviated as RPP) manufactured by Mitsui Chemicals, Inc.
Ingredient (d) softener
   Polybutene: IDEMITSU POLYBUTENE 100R (hereinafter, abbreviated as 100R) manufactured by Idemitsu Kosan Co., Ltd.
   Paraffinic oil: DIANA PROCESS PW-90 (hereinafter, abbreviated as PW90) manufactured by Idemitsu Kosan Co., Ltd.
   Calcium carbonate: Softon 3200 (hereinafter, abbreviated as 3200) manufactured by SHIRAISHI CALCIUM KAISHA, LTD.
   Talc: PKP#80 (hereinafter, abbreviated as PKP80) manufactured by Maruo Calcium Co., Ltd.
Styrene-based elastomer (hereinafter, abbreviated as TPS)
   Hydrogenated styrene - butadiene-based block copolymer: Kraton G1650 (styrene content: 29%; hereinafter, abbreviated as SEBS) manufactured by Kraton Polymer Japan
   Hydrogenated styrene - isoprene-based block copolymer: SEPTON 2007 (styrene content: 30%, hereinafter, abbreviated as SEPS-1) manufactured by Kuraray Co., Ltd.
   Hydrogenated styrene - isoprene-based block copolymer: SEPTON 2063 (styrene content: 13%, hereinafter, abbreviated as SEPS-2) manufactured by Kuraray Co., Ltd.
   Hydrogenated styrene - butadiene isoprene-based block copolymer: SEPTON 4033 (styrene content: 30%, hereinafter, abbreviated as SEEPS) manufactured by Kuraray Co., Ltd.
Hereinafter, examples of manufacturing the isobutylene-based block copolymer are described.

### (Manufacture Example 1): triblock copolymer containing 30% styrene (hereinafter, abbreviated as SIBS-1)

A polymerization container of a ,500 mL separable flask was subjected to a nitrogen substitution, to which 97.6 mL of n-hexane (dried with a molecular sieve) and 140.5 mL of butyl chloride (dried with a molecular sieve) were added by using a syringe. After cooling the polymerization container by soaking in a -70°C dry ice / methanol bath, a solution-sending tube made of Teflon (registered trade name) was connected to a liquid collecting tube made of pressure-resistant glass imparted with a three-way cock containing 47.7 mL (505.3 mmol) of isobutylene monomer so as to send the isobutylene monomer into the polymerization container by means of a nitrogen pressure. To this, 0.097 g (0.42 mmol) of p-dicumyl chloride and. 0.073 g (0.84 mmol) of N,N-dimethylacetamide were added. Next, 1.66 mL (15.12 mmol) of titanium tetrachloride was added further to start polymerization. After stirring for 75 minutes from the start of the polymerization, about 1 mL of the polymerization solution was extracted for sampling from the polymerisation solution. Consequently, 13.71 g (131.67 mmol) of styrene monomer was added into the polymerization container. 75 minutes after the addition, the mixed solution was added to a large quantity of water so as to finish the reaction.

The reaction solution was washed twice with water, and the solvent was evaporated. The thus obtained polymer was Vacuum-dried at 60°C for 24 hours so as to obtain a target block copolymer. According to the GPC analysis on the thus obtained isobutylene-based block copolymer, the number-average molecular weight was 103,000, and the polystyrene content calculated on ¹H-NMR was 30 wt%.

### (Manufacture Example 2): Triblock copolymer containing 35% styrene (hereinafter, abbreviated as SIBS-2)

A target block copolymer was obtained in the similar manner as Manufacture Example 1, though the weight ratio of the isobutylene monomer to the styrene monomer was modified. According to the GPC analysis on the thus obtained isobutylene-based block copolymer, the number-average molecular weight was 104,000, and the polystyrene content calculated on ¹H-NMR was 35 wt%.

### (Manufacture Example 3): Triblock copolymer containing 15% styrene (hereinafter, abbreviated as SIBS-3)

A target block copolymer was obtained in the similar manner as Manufacture Example 1, though the weight ratio of the isobutylene monomer to the styrene monomer was modified. According to the GPC analysis on the thus obtained isobutylene-based block copolymer, the number-average molecular weight was 100,000, and the polystyrene content calculated on ¹H-NMR was 15 wt%.

### (Examples, Comparative Examples)

The respective ingredients were melt-kneaded for 5 minutes by using a Labo Plastmill (manufactured by Toyo Seiki Seisaku-sho Ltd.) set at 180°C, at the ratios as indicated in Tables 1-3. The thus kneaded products were press-molded at 170°C for 5 minutes so as to form press-sheets 1 mm and 2 mm in thickness and the respective physical properties were evaluated. The evaluation results are shown in Tables 1-3,

**[Table 1]**

| | | Ex.1 | Ex.2 | Ex.3 | Ex.4 | Ex.5 | Ex.6 | C.E.1 | C.E.2 | C.E.3 | C.E.4 | C.E.5 |
|---|---|---|---|---|---|---|---|---|---|---|---|---|
| In. (a) | SIBS-1 | 100 | 100 | 100 | 100 | 100 | | 100 | | | | |
| | SIBS-2 | | | | | | 100 | | | | | |
| TP5 | SEBS | | | | | | | | 100 | | | |
| | SEPS-1 | | | | | | | | | 100 | 50 | |
| | SEPS-2 | | | | | | | | | | 50 | |
| | SEEPS | | | | | | | | | | | 100 |
| In (b) | EA | 1 | 2 | 5 | | | | | 1 | 1 | 1 | 1 |
| | OA | | | | 2 | | | | | | | |
| | H4 | | | | | 2 | 1 | | | | | |
| JIS-A hardness | | 51 | 51 | 50 | 51 | 51 | 65 | 51 | 78 | 80 | 57 | 76 |
| Sealing property | | **•** | • | • | • | • | • | • | ▲ | ▲ | • | ▲ |
| Static friction coefficient | | 0.49 | 0.43 | 0.38 | 0.41 | 0.45 | 0.38 | 2.95 | 0.31 | 0.29 | 0.42 | 0.32 |
| Cap-opening property | | • | • | • | • | • | • | × | • | • | • | • |
| Oxygen transmission coefficient | | 0.45 | 0.47 | 0.51 | 0.47 | 0.48 | 0.46 | 0.43 | 3.1 | 3.3 | 3.6 | 3.2 |
| CO₂ transmission coefficient | | 1.2 | 1.3 | 1.3 | 1.2 | 1.2 | 1.2 | 1:2 | 9.7 | 9.9 | 10.5 | 9.9 |
| Gas barrier property | | • | • | • | • | • | • | • | × | × | × | × |
| MFR | | 0.1 | 0.2 | 0.3 | 0.2 | 0.2 | 0.1 | 0.1 | No flow | 3.7 | 5.2 | No flow |

| | | | | | | | | | | | | |
|---|---|---|---|---|---|---|---|---|---|---|---|---|
| Ex.: Example, C.E.: Comparative Example, In.: ingredient Note: the unit for every gas transmission coefficient is × 10⁻¹⁵ mol·m/m²·sec·Pa | | | | | | | | | | | | |

Table 1 indicates that each of Examples 1-6 relating to the cap liner compositions according to the present invention can provide a liner material having an excellent sealing property and sufficient cap-opening property and fluidity, and furthermore excellent gas barrier property. In Comparative Example 1 where the (b) lubricant as an essential ingredient of the present invention is not included, the cap-opening property is insufficient. In Comparative Examples 2-5 relating to conventional techniques, the gas transmission coefficients are high, which indicates that the gas barrier properties are inferior. Furthermore, the styrene contents in Example 1, Comparative Examples 2, 3 and 5 are about 30% respectively, but in Comparative Examples applying conventional techniques, the hardness is high, and thus the sealing property is inferior.

**[Table 2]**

| | | Example 7 | C.E.6 | C.E.7 | C.E.8 | C.E.9 |
|---|---|---|---|---|---|---|
| Ingredient (a) | SIBS-1 | 100 | | | | |
| TPS | SEBS | | 100 | | 100 | |
| | SEEPS | | | 100 | | 100 |
| Ingredient (b) | OA | 2 | 2 | 2 | 2 | 2 |
| Ingredient (c) | HDPE | 15 | 15 | 15 | 15 | 15 |
| Ingredient (d) | PW90 | | | | 50 | 50 |
| Filler | 3200 | 20 | 20 | 20 | 20 | 20 |
| JIS-A. hardness | | 65 | 98 | 96 | 62 | 63 |
| Sealing property | | • | × | × | • | • |
| Static friction coefficient | | 0.38 | 0.19 | 0.21 | 0.42 | 0.41 |
| Cap-opening property | | • | • | • | • | • |
| Oxygen transmission coefficient | | 0.39 | 2.5 | 2.6 | 5.5 | 5.1 |
| CO₂ transmission coefficient | | 1.1 | 8.8 | 8.5 | 11.9 | 11.6 |
| Gas barrier property | | • | × | × | × | × |
| MFR | | 0.2 | 0.08 | 0.06 | 0.5 | 0.4 |

| | | | | | | |
|---|---|---|---|---|---|---|
| Note: the unit for every gas transmission coefficient is × 10⁻¹⁵ mol·m/m²·sec·Pa | | | | | | |

In Table 2, a comparison is made of SIBS, SEBS and SEEPS whose styrene contents were adjusted to about 30%, to which high-density polyethylene was added for imparting fluidity. It is indicated from a comparison with Example 7 and Comparative Examples 6, 7 where the blending rates are adjusted, that the hardness of the SEBS and SEEPS according to conventional techniques is too high to obtain a sufficient sealing property. In Comparative Examples 8 and 9 where the hardness is adjusted by addition of softener in order to equalize the sealing property, the gas barrier property deteriorates due to the addition of large quantity of softener. Moreover, the softener will be eluted easily in the contents, and this is unfavorable in light of the sanitary characteristics. Since Example 7 using the SIBS of the present invention provides a proper hardness without addition of a softener, it realizes a cap liner composition having preferable sealing property and an excellent gas barrier property.

**[Table 3]**

| | | Ex.8 | Ex.9 | Ex.10 | Ex.11 | Ex.12 | Ex.13 | Ex.14 | Ex.15 | Ex.16 | Ex.17 | Ex.18 | Ex.19 |
|---|---|---|---|---|---|---|---|---|---|---|---|---|---|
| Ingredient(a) | SIBS-1 | 100 | 100 | 100 | 100 | 100 | 100 | 100 | 100 | 100 | 100 | 100 | |
| | SIBS-2 | | | | | | | | | | | | 100 |
| Ingredient (b) | EA | 1 | 1 | 1 | 1 | 1 | 1 | 1 | 1 | 1 | 1 | 1 | 1 |
| Ingredient (c) | HDPE | 20 | | | | | | 15 | 15 | 30 | 30 | 30 | |
| | LDPE | | 20 | 35 | | | | | | | | | 40 |
| | LLDPE | | | | 20 | | | | | | | | |
| | HPP | | | | | 20 | | | | | | | |
| | RPP | | | | | | 20 | | | | | | |
| Ingredient (d) | 100R | | | | | | | | | | 10 | | |
| | PW90 | | | | | | | | | | | 10 | |
| Filler Filter | 3200 | | | | | | | 20 | | | | | |
| | PKP80 | | | | | | | | 20 | | | | |
| JIS-A hardness | | 65 | 55 | 63 | 54 | 73 | 67 | 65 | 68 | 71 | 64 | 60 | 56 |
| Sealing property | | • | • | • | • | • | • | • | • | • | • | • | • |
| Static friction coefficient | | 0.38 | 0.41 | 0.44 | 0.49 | 0.29 | 0.33 | 0.38 | 0.42 | 0.34 | 0.43 | 0.41 | 0.41 |
| Cap-opening property | | • | • | • | • | • | • | • | • | • | • | • | • |
| Oxygen transmission coefficient | | 0.35 | 0.37 | 0.39 | 0.38 | 0.36 | 0.37 | 0.41 | 0.37 | 0.35 | 0.43 | 0.55 | 0.41 |
| CO₂ transmission coefficient | | 1.1 | 1.1 | 1.2 | 1.2 | 1.1 | 1.1 | 1.1 | 1.1 | 1.1 | 1.3 | 1.7 | 1.2 |
| Gas barrier property | | • | • | • | • | • | • | • | • | • | • | • | • |
| MFR | | 0.1 | 0.2 | 0.4 | 0.2 | 0.3 | 0.2 | 0.1 | 0.04 | 0.2 | 0,6 | 0.7 | 8.1 |

| | | | | | | | | | | | | | |
|---|---|---|---|---|---|---|---|---|---|---|---|---|---|
| Note the unit for every gas transmission coefficient is × 10⁻¹⁵ mol·m/m²·sec·Pa | | | | | | | | | | | | | |

In Examples 8-13 in Table 3, the types and amounts of (c) polyolefin are changed. The hardness is changed depending on the polyolefin type even when the added amounts are the same. The ingredient having the highest hardness is HPP, which is followed by RPP, HDPE, LDPE, and LLDPE in this order. However, any of the polyolefins can be adjusted to have appropriate hardness, and thus a sufficient sealing property can be imparted. Moreover, the polyolefins can serve to improve the cap-opening property and the gas barrier property. In Examples 9 and 10, the amount of LDPE in use is varied. The table shows in a comparison between Examples 9 and 10, when the amount of LDPE is increased, the hardness was raised further and the fluidity is improved. In Examples 14 and 15, calcium carbonate and talc are used as the filler. The sealing property, the cap-opening property and the gas barrier property are not sacrificed even by adding the filler. In Examples 16-18, polybutene and a paraffinic oil are added as softeners. Due to the addition of the softeners, the hardness is lowered and furthermore, the fluidity is improved. Though the gas barrier property deteriorates a little, the tendency can be suppressed preferably when polybutene is used. In Example 19 where the SIBS with a low content of styrene content (15%) is used, more polyolefin can be added, which is advantageous in view of the fluidity. According to any of the Examples, the object of the present invention can be achieved, that is, a cap liner composition having excellent gas barrier property and sanitary characteristics, and being opened easily in actual use, can be obtained.

## Claims

1. A cap liner composition comprising (a) 100 weight parts of isobutylene-based block copolymer formed of a polymer block based on isobutylene and a polymer block formed of a monomer ingredient not based on isobutylene, and (b) 0.1 to 20 weight parts of lubricant added to the (a) isnbutylerie-based block copolymer.

2. A cap liner composition further comprising (c) 1 to 100 weight parts of polyolefin added to the composition according to claim 1.

3. A cap liner composition further comprising (d) 1 to 100 weight parts of softener added to the composition according to claim 1 or 2.

4. The cap liner composition according to any of claims 1 to 3, wherein the polymer block that is included in the ingredient (a) and that is formed of a monomer ingredient not based on isobutylene is a polymer block based on an aromatic vinyl-based monomer.

5. The cap liner composition according to claim 4, wherein the (a) isobutylene-based block copolymer is a triblock copolymer formed of a polymer block based on an aromatic vinyl-based monomer; a polymer block based on isobutylene; and a polymer block based on an aromatic vinyl-based monomer.

6. The cap liner composition according to claim 4 or 5, wherein the aromatic vinyl-based monomer is at least one selected from the group consisting of styrene, p-methylstyrene, α-methylstyrene, and indene.

7. The cap liner composition according to any of claims 1 to 6, wherein the lubricant of the ingredient (b) is fatty acid amide.

8. The cap liner composition according to any of claims 2 to 7, wherein the polyolefin of the ingredient (c) is at least one selected from the group consisting of polyethylene and polypropylene.

9. The cap liner composition according to any of claims 3 to 8, wherein the softener of the ingredient (d) is polybutene oil.

10. A cap liner comprising the composition according to any of claims 1 to 9.
